# NOUVEAU FASCICULE DE BREVET EUROPEEN

(11) **EP 1 881 182 B2**
(45) Date de publication et mention de la décision concernant l'opposition: **02.03.2022**
(45) Mention de la délivrance du brevet: 18.04.2018
(21) Numéro de dépôt: 07290865.0
(22) Date de dépôt: 10.07.2007
(51) Int. Cl.: F01D 5/04, F01D 17/10, F04D 29/42, F04D 29/58, F02C 7/18, F02C 3/08

(54) **Système de refroidissement d'une cavité aval de rouet de compresseur centrifuge**
Kühlsystem für den Hohlraum hinter dem Rad eines Radialverdichters
Cooling system for a downstream cavity of a centrifugal compressor impeller

(30) Priorité: 19.07.2006 FR 0606538
(43) Date de publication de la demande: 23.01.2008
(73) Titulaire: Safran Aircraft Engines, 75015 Paris (FR)
(72) Inventeur: Argaud, Thierry, 77590 Chartrettes (FR); Brunet, Antoine Robert Alain, 77550 Moissy Cramayel (FR); Leininger, Jean-Christophe, 91300 Massy (FR)
(74) Mandataire: Ernest Gutmann - Yves Plasseraud S.A.S.

(56) Documents cités:
- BE-A- 467 445
- US-A- 3 651 645
- US-A- 4 825 643
- US-A- 5 555 721

## Description

La présente invention concerne un système de refroidissement d'une cavité aval de rouet de compresseur centrifuge dans une turbomachine telle notamment qu'un turboréacteur, un turbopropulseur d'avion ou un générateur de gaz.

Le document US-A-3,651,645 décrit une turbomachine comprenant un compresseur axial, un diffuseur à entrée et sortie axiales et des chambres de combustion.

Le document US-A-5,555,721 décrit un dispositif de refroidissement d'une turbomachine comprenant un compresseur centrifuge, un diffuseur et une chambre de combustion.

La cavité qui est formée en aval du rotor ou rouet d'un compresseur centrifuge dans une turbomachine doit être ventilée pour évacuer l'énergie thermique apportée par le rouet. Cette ventilation se fait en général par prélèvement d'air en sortie du compresseur, à la jonction avec l'entrée d'un diffuseur annulaire qui alimente une chambre de combustion.

Toutefois, comme cet air de ventilation est prélevé en sortie du compresseur, sa température est déjà relativement élevée. Elle est encore augmentée par frottement visqueux sur la face aval du rouet, de sorte que cette face peut être portée à une température élevée susceptible d'atteindre et de dépasser la température maximale admissible par le matériau du rouet, avec un risque de détérioration du rouet.

On a proposé de monter sur la face aval du rouet un bouclier annulaire de protection thermique. Cependant, ce bouclier est lourd et entraîne une augmentation de la masse de la turbomachine et de l'inertie en rotation du rouet du compresseur et peut diminuer les performances de la turbomachine.

L'invention a notamment pour but d'apporter une solution simple, efficace et économique à ces problèmes.

L'invention est définie par une turbomachine comprenant :
- un étage de compresseur comportant un rouet,
- un système de refroidissement d'une cavité annulaire aval du rouet,
- un diffuseur relié à une sortie dudit étage de compresseur, ledit diffuseur comportant un flasque annulaire qui s'étend en aval et le long du rouet et délimite la cavité annulaire en aval du rouet, ladite cavité annulaire étant ventilée par prélèvement d'air en sortie dudit étage de compresseur, le système de refroidissement comprenant :
   - une tôle annulaire, montée coaxialement autour dudit flasque annulaire du diffuseur et délimitant avec le flasque annulaire un passage annulaire, ladite tôle annulaire comportant au moins un orifice radial d'alimentation en air du passage annulaire, et
   - des moyens adaptés à ce que de l'air à une température inférieure à celle de l'air sortant de l'étage de compresseur centrifuge circule dans le passage annulaire d'amont en aval pour assurer le refroidissement et la ventilation du flasque annulaire du diffuseur,
   caractérisée en ce que :
   - ledit compresseur est un compresseur centrifuge, et,
   - lesdits moyens adaptés à ce que de l'air à une température inférieure à celle de l'air sortant de l'étage de compresseur centrifuge circule dans le passage annulaire d'amont en aval pour assurer le refroidissement et la ventilation du flasque annulaire du diffuseur comprennent un conduit d'alimentation en air frais de l'orifice radial de la tôle annulaire, le conduit d'alimentation étant raccordé, en aval, audit orifice radial et, en amont, à des moyens de prélèvement d'air sur un étage amont d'un compresseur axial ou en sortie d'un échangeur thermique de refroidissement
   - la tôle ayant une section sensiblement en L et comprend une partie amont radiale s'étendant en aval et à distance de la partie radiale amont du flasque, sensiblement parallèlement à celle-ci, et une partie aval sensiblement cylindrique s'étendant à l'extérieur et à distance de la partie cylindrique aval du flasque, sensiblement parallèlement à celle-ci, la partie radiale de la tôle comprenant à son extrémité radialement externe un rebord cylindrique comprenant ledit au moins un orifice radial.
   - le rebord cylindrique étant orienté vers l'amont et étant engagé depuis l'aval dans une rainure annulaire débouchant vers l'aval et formée à l'extrémité radialement interne de l'entrée du diffuseur.

Le présent document concerne aussi une turbomachine comprenant :
- un étage de compresseur comportant un rouet,
- un système de refroidissement d'une cavité annulaire aval du rouet,
- un diffuseur relié à une sortie dudit étage de compresseur, ledit diffuseur comportant un flasque annulaire qui s'étend en aval et le long du rouet et délimite la cavité annulaire en aval du rouet, ladite cavité annulaire étant ventilée par prélèvement d'air en sortie dudit étage de compresseur, le système de refroidissement comprenant :
   - une tôle annulaire, montée coaxialement autour dudit flasque annulaire du diffuseur et délimitant avec le flasque annulaire un passage annulaire, ladite tôle annulaire comportant au moins un orifice radial d'alimentation en air du passage annulaire, et
   - des moyens adaptés à ce que de l'air à une température inférieure à celle de l'air sortant de l'étage de compresseur centrifuge circule dans le passage annulaire d'amont en aval pour assurer le refroidissement et la ventilation du flasque annulaire du diffuseur,
   - ledit compresseur est un compresseur centrifuge, et,
   - lesdits moyens adaptés à ce que de l'air à une température inférieure à celle de l'air sortant de l'étage de compresseur centrifuge circule dans le passage annulaire d'amont en aval pour assurer le refroidissement et la ventilation du flasque annulaire du diffuseur comprennent un conduit d'alimentation en air frais de l'orifice radial de la tôle annulaire, le conduit d'alimentation étant raccordé, en aval, audit orifice radial et, en amont, à des moyens de prélèvement d'air sur un étage amont d'un compresseur axial ou en sortie d'un échangeur thermique de refroidissement.

L'air frais qui circule dans le passage formé entre la tôle annulaire et le flasque du diffuseur, assure le refroidissement et la ventilation de ce flasque qui peut ainsi absorber une majeure partie de la chaleur générée par le cisaillement de l'air entre le rouet du compresseur et le flasque du diffuseur.

L'air de ventilation de la cavité aval du rouet reste relativement frais et peut refroidir efficacement le rouet du compresseur, et ce sans besoin de bouclier de protection thermique. Le débit d'air prélevé en sortie du compresseur pour l'alimentation de la cavité aval du rouet et la ventilation du rouet du compresseur peut être diminué de manière à augmenter le débit d'air d'alimentation du diffuseur et de la chambre de combustion et à améliorer les performances de la turbomachine.

On a constaté, dans un exemple de réalisation, que l'alimentation du passage annulaire en air prélevé sur le deuxième étage du compresseur permet de réduire d'environ 50 à 60°C la température du rouet du compresseur.

Dans une réalisation, la tôle annulaire est sensiblement parallèle au flasque du diffuseur, la tôle annulaire et le flasque ayant chacun une forme sensiblement en L en section axiale.

La tôle annulaire et le flasque du diffuseur peuvent être fixés à leurs extrémités aval sur des moyens d'injection d'air de refroidissement et/ou de ventilation de composants situés en aval de la chambre de combustion.

Pour faciliter son montage, la tôle peut comprendre à son extrémité amont un bord cylindrique centré et supporté par un rebord cylindrique du diffuseur.

Le passage annulaire entre la tôle et le flasque du diffuseur est raccordé en amont à des moyens de prélèvement d'air sur un étage amont d'un compresseur axial ou en sortie d'un échangeur thermique de refroidissement. Ce passage est raccordé également en aval à un conduit d'évacuation de l'air de ventilation, qui est à une pression inférieure à celle de l'air sortant du diffuseur.

La tôle annulaire est avantageusement réalisée dans un matériau à faible conductivité thermique ou comporte un revêtement en matériau à faible conductivité thermique.

L'invention concerne encore une turbomachine, telle qu'un turboréacteur ou un turbopropulseur d'avion, caractérisée en ce qu'elle comprend un système de refroidissement tel que décrit ci-dessus.

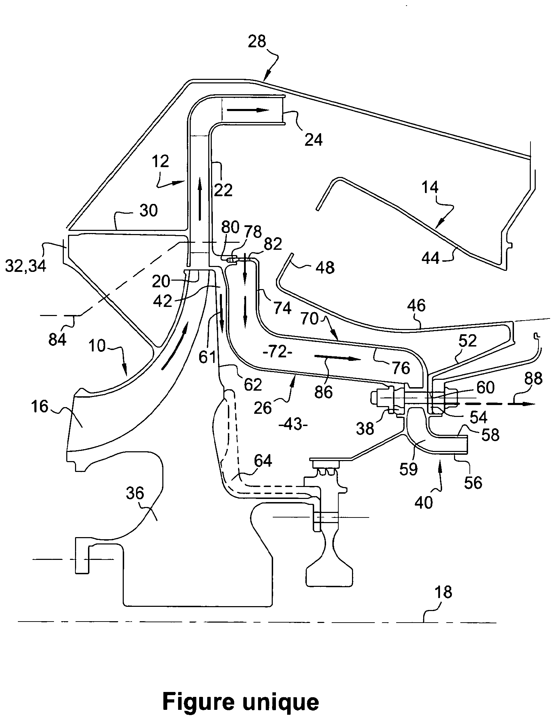

L'invention sera mieux comprise et d'autres détails, caractéristiques et avantages de la présente invention apparaîtront à la lecture de la description suivante faite à titre d'exemple non limitatif et en référence au dessin annexé qui est une demi-vue schématique partielle en coupe axiale d'un système de refroidissement selon l'invention.

La figure unique représente une partie d'une turbomachine telle qu'un turboréacteur ou un turbopropulseur d'avion, comportant d'amont en aval, dans le sens de l'écoulement des gaz à l'intérieur de la turbomachine, un étage centrifuge de compresseur 10, un diffuseur 12 et une chambre de combustion 14.

L'entrée 16 de l'étage centrifuge 10 est orientée vers l'amont, sensiblement parallèlement à l'axe 18 de la turbomachine, et sa sortie 20 est orientée vers l'extérieur, sensiblement perpendiculairement à l'axe 18, et est alignée avec une entrée radiale 22 du diffuseur 12. Ce diffuseur est de forme annulaire coudée à 90° et comprend une sortie annulaire 24 qui est orientée parallèlement à l'axe de la turbomachine et qui débouche radialement à l'extérieur de l'entrée de la chambre de combustion 14.

Le diffuseur 12 est supporté par un carter externe 28 de la turbomachine qui entoure extérieurement le compresseur 10, le diffuseur 12 et la chambre de combustion 14. Le diffuseur 12 comprend un voile cylindrique 30 qui s'étend vers l'amont depuis l'entrée 22 du diffuseur et se termine à son extrémité amont par une bride annulaire 32 fixée par des moyens appropriés du type vis-écrou à une bride 34 du carter externe 28.

Le diffuseur 12 comporte également un flasque annulaire aval 26 à section sensiblement en L dont une partie amont est sensiblement radiale et est reliée à son extrémité radialement externe à l'entrée 22 du diffuseur, et dont une partie aval est sensiblement cylindrique et se termine à son extrémité aval par une bride annulaire 38 de fixation sur des moyens 40 d'injection d'air de ventilation de composants (notamment de turbine) situés en aval de la chambre de combustion 14.

La partie radiale du flasque 26 du diffuseur s'étend en aval du rotor ou rouet 36 de l'étage centrifuge de compresseur, le long et à faible distance de celui-ci pour former un espace annulaire radial 42 communiquant à son extrémité radialement externe avec la sortie 20 de l'étage de compresseur, et à son extrémité radialement interne avec une cavité annulaire 43 délimitée par la partie aval cylindrique du flasque 26.

La chambre de combustion 14 comporte deux parois de révolution coaxiales 44, 46 s'étendant l'une à l'intérieur de l'autre et reliées à leurs extrémités amont à une paroi 48 de fond de chambre. La paroi radialement externe 44 de la chambre est fixée à son extrémité aval au carter externe 28, et sa paroi radialement interne 46 est reliée à son extrémité aval à une virole tronconique 52 qui comporte à son extrémité radialement interne une bride annulaire interne 54 de fixation sur les moyens d'injection 40 précités.

Les moyens d'injection 40 comprennent deux parois de révolution interne 56 et externe 58 à section sensiblement en L qui sont montées l'une à l'intérieur de l'autre et définissent entre elles un conduit annulaire 59 coudé à angle droit qui débouche à son extrémité amont radialement vers l'extérieur et à son extrémité aval axialement vers l'aval. Le conduit annulaire 59 est alimenté par de l'air sortant du diffuseur 12.

La bride 38 du flasque 26 du diffuseur est appliquée sur une face radiale amont de la paroi interne 56 des moyens d'injection 40, en amont de leur entrée, et la bride 54 de la virole 52 est appliquée sur une face radiale aval de la paroi externe 58 des moyens 40, en aval de leur entrée. Des orifices 60 sont formés sur les brides 38 et 54 pour le passage de moyens de fixation du type vis-écrou qui s'étendent à travers des orifices correspondants des parois 56, 58 des moyens d'injection 40.

Une petite partie du débit d'air sortant de l'étage de compresseur 10 passe dans l'espace radial 42 délimité par la face aval 62 du rouet 36 et le flasque 26 du diffuseur. Cet air (flèche 61) est soumis à des forces de cisaillement importantes provoquées par la rotation du rouet 36 à proximité de la partie radiale du flasque, ce qui engendre de la chaleur et entraîne un échauffement du rouet qui a une tenue thermique limitée.

Dans la technique actuelle, la solution consiste à monter un bouclier annulaire 64 (représenté en traits pointillés) sur la face aval du rouet 36 du compresseur pour protéger thermiquement le rouet de la chaleur et éviter qu'il n'atteigne des températures importantes en fonctionnement.

Le système selon l'invention permet de supprimer ce bouclier, grâce à une tôle annulaire 70 montée radialement entre la chambre de combustion 14 et le flasque 26 du diffuseur et délimitant avec ce dernier un passage annulaire 72 alimenté en air qui est plus frais que l'air sortant du compresseur 10.

Comme représenté, la tôle 70 a une section sensiblement en L et comprend une partie amont radiale 74 s'étendant en aval et à distance de la partie radiale amont du flasque 26, sensiblement parallèlement à celle-ci, et une partie aval 76 sensiblement cylindrique s'étendant à l'extérieur et à distance de la partie cylindrique aval du flasque 26, sensiblement parallèlement à celle-ci.

La partie radiale 74 de la tôle comprend à son extrémité radialement externe un rebord cylindrique 78 orienté vers l'amont qui est engagé depuis l'aval dans une rainure annulaire 80 débouchant vers l'aval et formée à l'extrémité radialement interne de l'entrée 22 du diffuseur. Le rebord 78 de la tôle 70 comprend au moins un orifice radial 82 d'alimentation en air frais du passage annulaire 72. Cet orifice 82 est raccordé par un conduit d'alimentation (schématiquement représenté en traits pointillés 84) à des moyens de prélèvement d'air sur un étage amont d'un compresseur axial (non représenté) situé en amont de l'étage centrifuge 10, ou à la sortie d'un premier circuit d'un échangeur thermique de refroidissement qui comprend de façon connue un second circuit dans lequel circule un fluide de refroidissement.

La paroi cylindrique 76 de la tôle est fixée par soudure à son extrémité aval aux moyens d'injection 40, par exemple et comme représenté, à l'extrémité radialement externe de la paroi externe 58 des moyens d'injection 40.

L'air 86 qui s'écoule dans le passage 72 permet de ventiler et de refroidir le flasque 26 du diffuseur afin que celui-ci puisse absorber la majeure partie de la chaleur générée par le cisaillement de l'air entre le rouet 36 du compresseur et la partie radiale du flasque 26, et limite de cette manière l'échauffement du rotor et l'apparition d'un gradient de température le long de la face aval 62 du rouet du compresseur. Cet air 86 est ensuite évacué par au moins un conduit (schématiquement représenté en traits pointillés 88) raccordé à l'extrémité aval du passage annulaire 72, pour la ventilation d'autres composants de la turbomachine.

Le réglage de la distance entre la tôle 70 et le flasque 26 du diffuseur permet de contrôler la ventilation du flasque 26 et donc le coefficient d'échange thermique entre le flasque et l'air 61 circulant dans l'espace 42 et la cavité 43, et le coefficient d'échange thermique entre le flasque et l'air 86 circulant dans la cavité 72. Pour un débit d'air donné d'alimentation du passage 72, plus la distance entre la tôle 70 et le flasque 26 est faible, plus la vitesse de l'air 86 dans le passage 72 est élevée et plus le coefficient d'échange thermique entre cet air et le flasque et le coefficient d'échange thermique entre le flasque 26 et l'air 61 s'écoulant entre le rouet 36 et le flasque 26 sont importants.

La tôle 70 est montée à étanchéité sur le diffuseur 12 et les moyens d'injection 40 ce qui permet d'alimenter le passage 72 en air à une pression différente de celle de l'air circulant entre la tôle 70 et la chambre de combustion 14 et dans la cavité annulaire 43.

La tôle annulaire 70 est montée dans la turbomachine de la manière suivante :
Après que le diffuseur 12 ait été monté sur le compresseur centrifuge 10 et avant l'assemblage des moyens d'injection 40 et de la chambre de combustion 14 sur le flasque 26 du diffuseur, la tôle 70 est amenée vers l'amont et son rebord 78 est emboîté dans la rainure 80 du diffuseur 12. Les moyens d'injection 40 sont assemblés sur la bride 38 du flasque du diffuseur, puis l'extrémité radialement externe de la paroi 58 des moyens d'injection 40 et l'extrémité aval de la tôle 70 sont soudés ensemble par points ou par un cordon de soudure annulaire. La chambre est ensuite déplacée vers l'amont et fixée par la virole 52 sur les moyens d'injection 40.

La tôle 70 et éventuellement les conduits d'alimentation 84 et d'évacuation 88 du passage 72 sont préférentiellement réalisés dans un matériau à faible conductivité thermique ou comportent un revêtement de matériau à faible conductivité thermique.

## Revendications

1. Turbomachine comprenant :
- un étage de compresseur (10) comportant un rouet (36),
- un système de refroidissement d'une cavité annulaire (43) aval du rouet,
- un diffuseur (12) relié à une sortie (20) dudit étage de compresseur (10), ledit diffuseur (12) comportant un flasque annulaire (26) qui s'étend en aval et le long du rouet (10) et délimite la cavité annulaire (43) en aval du rouet (36), ladite cavité annulaire (43) étant ventilée par prélèvement d'air en sortie dudit étage de compresseur (10), le système de refroidissement comprenant :
- une tôle annulaire (70), montée coaxialement autour dudit flasque annulaire (26) du diffuseur et délimitant avec le flasque annulaire un passage annulaire (72), ladite tôle annulaire (70) comportant au moins un orifice radial (82) d'alimentation en air du passage annulaire (72), et
- des moyens (84) adaptés à ce que de l'air à une température inférieure à celle de l'air sortant de l'étage de compresseur centrifuge (10) circule dans le passage annulaire (72) d'amont en aval pour assurer le refroidissement et la ventilation du flasque annulaire (26) du diffuseur (12),
**caractérisée en ce que** :
- ledit compresseur est un compresseur centrifuge, et,
- lesdits moyens (84) adaptés à ce que de l'air à une température inférieure à celle de l'air sortant de l'étage de compresseur centrifuge (10) circule dans le passage annulaire (72) d'amont en aval pour assurer le refroidissement et la ventilation du flasque annulaire (26) du diffuseur (12) comprennent un conduit (84) d'alimentation en air frais de l'orifice radial (82) de la tôle annulaire (70), le conduit (84) d'alimentation étant raccordé, en aval, audit orifice radial (82) et, en amont, à des moyens de prélèvement d'air sur un étage amont d'un compresseur axial ou en sortie d'un échangeur thermique de refroidissement
- la tôle ayant une section sensiblement en L et comprend une partie amont radiale (74) s'étendant en aval et à distance de la partie radiale amont du flasque (26), sensiblement parallèlement à celle-ci, et une partie aval (76) sensiblement cylindrique s'étendant à l'extérieur et à distance de la partie cylindrique aval du flasque (26), sensiblement parallèlement à celle-ci, la partie radiale de la tôle (70) comprenant à son extrémité radialement externe un rebord cylindrique (78) comprenant ledit au moins un orifice radial (82).
- le rebord cylindrique (78) étant orienté vers l'amont et étant engagé depuis l'aval dans une rainure annulaire (80) débouchant vers l'aval et formée à l'extrémité radialement interne de l'entrée (22) du diffuseur.

2. Turbomachine selon la revendication 1, **caractérisée en ce que** la tôle annulaire (70) et le flasque (26) du diffuseur sont fixés à leurs extrémités aval sur des moyens (40) d'injection d'air de ventilation.

3. Turbomachine selon l'une des revendications précédentes, **caractérisé en ce que** la tôle annulaire (70) est montée à étanchéité sur le flasque (26) du diffuseur.

4. Turbomachine selon l'une des revendications précédentes, **caractérisée en ce que** la tôle annulaire (70) est réalisée dans un matériau à faible conductivité thermique.

5. Turbomachine selon l'une des revendications précédentes, **caractérisée en ce que** la tôle annulaire (70) comporte un revêtement de matériau à faible conductivité thermique.

6. Turbomachine selon l'une des revendications précédentes, **caractérisée en ce que** le passage annulaire (72) est raccordé en aval à un conduit d'évacuation d'air de ventilation.

## Patentansprüche

1. Turbotriebwerk, enthaltend:
- eine Verdichterstufe (10) mit einem Laufrad (36),
- ein Kühlsystem zum Kühlen eines stromabwärtigen, ringförmigen Hohlraums (43) des Laufrades,
- einen Diffusor (12), der mit einem Ausgang (20) der Verdichterstufe (10) verbunden ist, wobei der Diffusor (12) einen ringförmigen Flansch (26) enthält, der sich stromabwärts und entlang des Laufrades (36) erstreckt und den stromabwärtigen, ringförmigen Hohlraum (43) des Laufrades (36) eingrenzt, wobei der ringförmige Hohlraum (43) durch Luftentnahme am Ausgang der Verdichterstufe (10) belüftet wird, wobei das Kühlsystem enthält:
- ein ringförmiges Blech (70), das koaxial um den ringförmigen Flansch (26) des Diffusors herum angebracht ist und mit dem ringförmigen Flansch einen ringförmigen Durchtritt (72) eingrenzt, wobei das ringförmige Blech (70) zumindest eine radiale Versorgungsöffnung (82) zur Luftversorgung des ringförmigen Durchtritts (72) aufweist, und
- Einrichtungen (84), die dazu ausgelegt sind, dass Luft mit einer Temperatur geringer als die von der Luft, die aus der Kreiselverdichterstufe (10) austritt, in den ringförmigen Durchtritt (72) von stromaufwärts nach stromabwärts strömt, um die Kühlung und Belüftung des ringförmigen Flansches (26) des Diffusors (12) sicherzustellen,
**dadurch gekennzeichnet, dass**:
- der Verdichter ein Kreiselverdichter ist und
- die Einrichtungen (84), die dazu ausgelegt sind, dass Luft mit einer Temperatur geringer als die von der Luft, die aus der Kreiselverdichterstufe (10) austritt, in den ringförmigen Durchtritt (72) von stromaufwärts nach stromabwärts strömt, um die Kühlung und Belüftung des ringförmigen Flansches (26) des Diffusors (12) sicherzustellen, eine Versorgungsleitung (84) zur Frischluftversorgung der radialen Öffnung (82) des ringförmigen Blechs (70) aufweisen, wobei die Versorgungsleitung (84) stromabwärts an die radiale Öffnung (82) und stromaufwärts an Luftentnahmeeinrichtungen an einer stromaufwärtigen Stufe eines axialen Verdichters oder am Ausgang eines Wärmetauschers zum Kühlen angeschlossen ist,
- das Blech einen im Wesentlichen L-förmigen Querschnitt aufweist und einen radialen stromaufwärtigen Abschnitt (74), der sich stromabwärts und beabstandet von dem stromaufwärtigen radialen Abschnitt des Flansches (26) im Wesentlichen parallel zu diesem erstreckt, und einen im Wesentlichen zylindrischen stromabwärtigen Abschnitt (76) umfasst, der sich außerhalb und beabstandet von dem stromabwärtigen zylindrischen Abschnitt des Flansches (26) im Wesentlichen parallel zu diesem erstreckt, wobei der radiale Abschnitt des Blechs (70) an seinem radial äußeren Ende eine zylindrische Randleiste (78) aufweist, welche die mindestens eine radiale Öffnung (82) aufweist,
- wobei die zylindrische Randleiste (78) stromaufwärts gerichtet ist und von der stromabwärtigen Seite in eine ringförmige Nut (80) eingreift, die stromabwärts mündet und am radial inneren Ende des Einlasses (22) des Diffusors ausgebildet ist.

2. Turbotriebwerk nach Anspruch 1, **dadurch gekennzeichnet, dass** das ringförmige Blech (70) und der Flansch (26) des Diffusors an ihren stromabwärtigen Enden an Zuführeinrichtungen (40) zum Zuführen von Belüftungsluft befestigt sind.

3. Turbotriebwerk nach einem der vorangehenden Ansprüche, **dadurch gekennzeichnet, dass** das ringförmige Blech (70) abdichtend am Flansch (26) des Diffusors angebracht ist.

4. Turbotriebwerk nach einem der vorangehenden Ansprüche, **dadurch gekennzeichnet, dass** das ringförmige Blech (70) aus einem Material mit geringer Wärmeleitfähigkeit hergestellt ist.

5. Turbotriebwerk nach einem der vorangehenden Ansprüche, **dadurch gekennzeichnet, dass** das ringförmige Blech (70) eine Beschichtung aus einem Material mit geringer Wärmeleitfähigkeit enthält.

6. Turbotriebwerk nach einem der vorangehenden Ansprüche, **dadurch gekennzeichnet, dass** der ringförmige Durchtritt (72) stromabwärts an eine Abführleitung zum Abführen von Belüftungsluft angeschlossen ist.

## Claims

1. A turbine engine comprising:
- a compressor stage (10) including an impeller (36),
- a system for cooling an annular cavity (43) downstream of the impeller,
- a diffuser (12) connected to an outlet of the compressor stage (10), said diffuser (12) including an annular flange (26) which extends downstream and along the impeller (36) and delimits the annular cavity (43) downstream of the impeller (36), said cavity (43) being ventilated by air bleed-off at the outlet of the compressor stage (10), the system for cooling comprising:
- an annular sheet (70), mounted coaxially around said annular flange (26) of the diffuser and delimiting with the annular flange an annular passage (72), said annular sheet (70) including at least one radial opening (82) for supplying the annular passage (72) with air, and
- means (84) adapted to have air, at a temperature lower than that of the air leaving the compressor (10) stage, which circulates in the annular passage (72) from upstream to downstream for ensuring the cooling and ventilation of the annular flange (26) of the diffuser (12),
**Characterised in that**:
- said compressor is a centrifugal compressor, and,
- said means (84) adapted to have air, at a temperature lower than that of the air leaving the compressor (10) stage, which circulates in the annular passage (72) from upstream to downstream for ensuring the cooling and ventilation of the annular flange (26) of the diffuser (12), comprise a supplying duct (84) for supplying with cool air the radial opening (82) of the annular sheet (70), the supplying duct (84) being connected, downstream, to said radial opening (82), and upstream, to air extracting means on an upstream axial compressor stage or at the output of a cooling thermal exchanger
- the sheet having a substantially L-section and comprises a radial upstream part (74) extending downstream and at some distance from the upstream radial part of the flange (26), substantially parallel to the latter part, and a substantially cylindrical downstream part (76) extending outwards and at some distance from the downstream cylindrical part of the flange (26), substantially parallel to the latter part, the radial part of the sheet (70) comprising at its radially outer end a cylindrical rim (78) comprising said at least radial opening (82),
- the cylindrical rim (78) being oriented upstream and being engaged from downstream in an annular groove (80) opening downstream and formed at the radially inner end of the inlet (22) of the diffuser.

2. The turbine engine as claimed in claim 1, **characterised in that** the annular sheet (70) and the flange (26) of the diffuser are fixed at their downstream ends to ventilation air injection means (40).

3. The turbine engine as claimed in one of the preceding claims, **characterised in that** the annular sheet (70) is mounted leaktightly on the flange (26) of the diffuser.

4. The turbine engine as claimed in one of the preceding claims, **characterised in that** the annular sheet (70) is made of a material with low thermal conductivity.

5. The turbine engine as claimed in one of the preceding claims, **characterised in that** the annular sheet (70) comprises a cladding of material with low thermal conductivity.

6. The turbine engine as claimed in one of the preceding claims, **characterised in that** the annular passage (72) is connected downstream to a ventilation air discharge duct.
